# EUROPEAN PATENT APPLICATION

(11) **EP 1 775 021 A1**
(43) Date of publication of application: **18.04.2007**
(21) Application number: 05022254.6
(22) Date of filing: 12.10.2005
(51) Int. Cl.: B01J 35/04, B01J 35/00, B01J 37/02, B01J 37/08, B01J 23/10, B01J 23/12, B01J 23/38

(54) **Process of producing a catalytic coating and catalyst filters**

(71) Applicant: HONDA MOTOR COMPANY LTD., Tokyo 107 (JP)
(72) Inventor: Konstandopoulod, Athanasios G., 54352 Thessaloniki (GR); Böettcher, Jörg, 63500 Seligenstadt (DE)
(74) Representative: Rupp, Christian

(57) **Abstract**

A process of producing a catalytic coating on a porous filter support is described wherein catalyst nanoparticles are formed and said catalyst nanoparticles are deposited on the porous filter support. In addition, catalyst filters having excellent purification performance are described.

## Description

### Background of the Invention

### Field of the Invention

The present invention relates to a process of producing a catalytic coating on a porous filter support and a catalyst comprising said catalytic coating which is suitable for the purification of particulate matter emitted from an internal combustion engine. A catalytic filter according to the invention can e.g. be used as a particle filter for diesel engines.

### Description of the Related Art

An exhaust gas purifying filter is used to collect particulate matter emitted from an internal combustion engine and the particulate matter is removed by oxidation. Specifically, diesel fuel when burned in an internal combustion engine emits fine carbon particles such as soot which causes severe environmental problems.

It is known that coating the filter's surface(s) with a catalyst can promote oxidation of the carbon particulate matter using a catalytic reaction.

The exhaust gas purifying filters commonly used in automotive field are so-called honeycomb particulate filters which have regulated diameters of pores included in the surface of dividing walls of the honeycomb structural body made of ceramic. Such filters have been shown to improve the efficiency of capturing the particulate matter on the dividing wall surface.

In addition, diesel particulate filters (DPFs) have become more important to comply with particulate emission standards for diesel powered vehicles. The dominant geometric filter configuration is a honeycomb structural body comprising a wall-flow multi-channel structure with alternatively plugged channels where particle laden exhaust flow is filtered through porous walls and a soot deposit grows in the inlet channels.

Usually, the catalytic layer to be provided on the catalyst's surface(s) is formed by slurry impregnation in the following manner. A support powder such as Al₂O₃, ZrO₂, CeO₂, TiO₂ and SiO₂ is mixed with a binder component such as an aluminium salt and water to make a slurry. The resulting slurry is deposited on the catalyst walls. Thereafter, the deposited slurry is calcined to make a coating layer. Then, a catalytic ingredient is loaded on the coating layer.

Alternatively, a catalytic ingredient can be loaded on the support powder in advance. The resulting catalytic powder can be used to prepare a slurry. The thus prepared slurry can be used for a catalytic coating layer. In order to deposit a slurry on the walls, it is possible to employ the ordinary immersion method. The catalysts usually used are members of the platinum group metals (PGM). These materials have the effect of lowering the burning temperature of the particulate matter so as to make it easier to burn and improving the reactivity of the particulate matter through a catalytic reaction with NOx and the particulate matter.

Catalyst coatings made by slurry impregnation of catalyst bodies, however, have been shown to suffer from an increased backpressure due to clogging obstruction of pores, resulting in an increased fuel consumption. In addition, catalyst coatings containing noble metals such as platinum and palladium extremely increase the costs in catalyst production.

### Summary of the invention

The present invention has been made in consideration of the problems of the prior art described above. It is an object of the present invention to provide a cost-saving technique for depositing a catalyst material on a catalyst body providing an improved interaction between the catalyst particles deposited and the exhaust gas thereby increasing reactivity of the catalyst coating.

A first aspect of the present invention is a process of producing a catalytic coating on a porous filter support comprising formation of catalyst nanoparticles and deposition of said catalyst nanoparticles on the porous filter support.

In a second aspect, the present invention is directed to a catalyst filter comprising a porous filter support and a catalytic coating provided thereon.

In a third aspect, the present invention concerns a catalyst filter comprising a porous filter support and a catalytic coating which is produced as described above.

In a fourth aspect, the present invention is directed to the use of a catalyst for removing particulate matter emitted from internal combustion engines.

The process of the present invention provides a catalytic coating comprising catalytic particles that are at least ten times smaller than catalyst particles deposited by conventional slurry impregnation. It has been shown that a catalyst coated according to the process of the present invention shows a high surface area due to the extremely small particle size of the catalyst deposited. The homogenous distribution of the fine catalyst particles on the catalyst support surface provides an optimum contact with the exhaust gas. The high porosity positively affects the back pressure which will be lower, thus reducing the fuel consumption.

In addition, the process of the present invention provides cost-saving catalytic coatings by using predominantly catalytic materials other than expensive platinum and/or palladium. The high efficiency of the catalyst coated according to the present invention is independent from the use of noble metals as catalyst materials because the high flow and high loading capability is due of the extremely homogenous catalyst particle distribution, with particle sizes being in nanometer ranges.

### Brief Description of the Drawings

The drawings of the figures are to illustrate the present invention.
- Fig. 1: shows an example of a hot wall aerosol reactor used to carry out the process of the invention.
- Fig. 2: is an SEM photograph of catalyst particles on a filter support deposited according to the process of the invention.
- Fig. 3: represents an SEM photograph of catalyst particles on a filter support deposited according to conventional slurry impregnation.

### Detailed Description of the present Invention

The process of the present invention is a technique for catalyst nanoparticle synthesis and in-situ deposition on a porous filter support. The formation of catalyst nanoparticles and deposition of said catalyst nanoparticles on the porous filter support is a continuous process that takes place in one step. The process, however, may be theoretically divided into three stages. In the first stage, an aerosol comprising droplets containing catalyst precursor materials such as e.g. salts is generated. Next, as the second stage, the aerosol droplets are thermally treated thereby decomposing the catalyst precursor salts to produce catalyst particles. Subsequently, in a third stage, the catalyst nanoparticles are deposited on the porous filter support.

The catalyst nanoparticles in the form of catalyst powder are then highly dispersed and deposited on the surface of the porous filter support. Backscatter analysis has confirmed that the deposition even reaches the bottoms of the pores of the filter support.

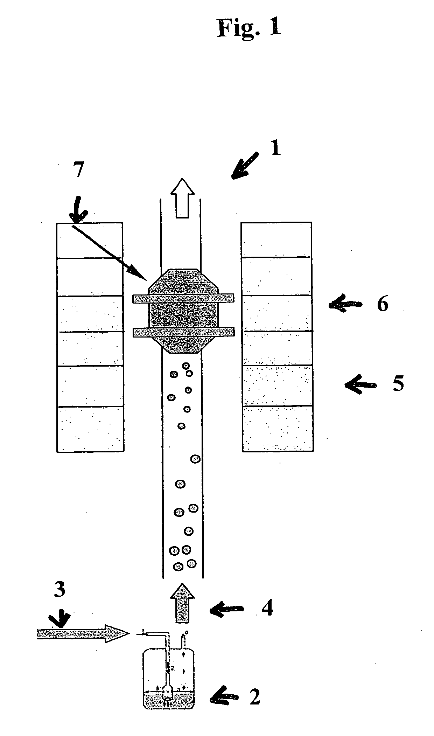

In a preferred embodiment of the present invention the catalyst nanoparticle formation and the catalyst nanoparticle deposition is carried out in an aerosol reactor. An example of an aerosol reactor is a hot wall aerosol reactor which is shown in Fig. 1. The hot wall aerosol reactor 1 comprises a container 2 containing a solution of catalyst precursor salts. A carrier gas 3 is blown into the solution of catalyst precursor salts. By means of an atomizer (not shown) the solution of catalyst precursor salts is atomized into small droplets 4 which are introduced in the first heating zone 5 where the decomposition of the precursor salts takes place. In the second heating zone 6 the filter support 7 to be coated is disposed. In this second heating zone catalyst powder production occurs under simultaneously depositing catalyst nanoparticles on the filter support surfaces.

Said technique for catalyst nanoparticle synthesis and in-situ deposition on porous filter supports is also called Aerosol Spray Pyrolysis (ASP). This process is applicable to any kind of porous filter supports. In a preferred embodiment of the present invention honeycomb monolithic diesel particulate filters (DPF) are treated for catalytic applications.

If desired, the reactor may be designed such that a multi catalyst filter coating can be performed to achieve faster production of coated catalyst filters. It has been shown that a satisfactory catalyst load (in terms of mass loading) is provided in good uniformity.

For certain applications of catalytic filters, it can be advantageous to combine the process of the present invention with slurry impregnation.

The catalyst to be deposited can be a noble metal and/or an oxide selected from the group consisting of transition metals, lanthanides, actinides, misch metals thereof and mixtures thereof. In a preferred embodiment of the present invention the catalyst deposited does not contain noble metals such as platinum or palladium or only less amounts thereof. An example of a suitable catalyst is ceria or an derivative thereof, e.g. in form of a misch metal or mixture with other metal oxides. In addition, the metal oxide may be doped by another metal.

Usually, the particle size of the catalyst nanoparticles deposited is influenced by the concentration of the catalyst precursor salt solution. In addition, catalyst nanoparticle deposition depends on various process parameters, such as reactor temperature and precursor type.

In a further preferred embodiment of the present invention, the process of producing a catalytic coating on a porous filter support comprises the following steps:
- preparation of a solution containing at least one catalyst precursor salt;
- atomization of the catalyst precursor salt solution into aerosol droplets;
- heat treatment of the aerosol droplets in a first heating zone to decompose the catalyst precursor salts and
- deposition of catalyst nanoparticles on a porous filter support in a second heating zone.

If the catalyst to be deposited should be a mixed metal (oxide) the precursor solution contains at least two catalyst precursor salts.

In a preferred embodiment of the invention, the catalyst precursor solution is prepared by mixing organic and/or inorganic salts of metals belonging to the transition elements, lanthanides and actinides, organic additives and promoters in an aqueous medium. If desired, a salt of a noble metal may be also admixed.

Usually, the anions of the organic and inorganic salts are selected from the group of nitrates, chlorides, acetates and oxalates. An example of an inorganic metal salt is cerium nitrate, optionally doped with another metal..

The well mixed catalyst precursor solution is atomized into droplets by an atomizer, usually an ultrasonic or an air-assisted atomizer, but also direct-feed liquid pressure or electrostatic atomizers (including electrosprays) may be employed. The precursor salt(s) containing droplets form a chemical aerosol feed which is transported into the first reaction zone of the aerosol reactor by a carrier gas blown into the catalyst precursor salt solution.

Inside the reaction zone of the aerosol reactor the precursor(s) decompose(s) to the corresponding metal oxide(s). This decomposition occurs in the first heating zone of the reactor where the temperature is kept in the range of 100 to 500 °C. In the second heating zone catalyst powder in form of catalyst nanoparticles is produced at temperature conditions in the range of 400 to 1,500°C. The catalyst nanoparticle powder is then deposited on the porous filter support arranged in said second heating zone. Alternatively, a higher number of heating zones may be employed to achieve any desired temperature profile along the aerosol reactor axis from 100 to 1500 °C.

The catalyst nanoparticles are deposited on the surface of the porous filter support in a range of 0.5 to 60.00 g/m² (mass loading). Preferably, the range is 5.00 to 35.00 g/m², particularly preferred 12.00 to 30.00 g/m². The mass loading is particularly important for the efficiency of the coating and depends on the catalyst to be deposited.

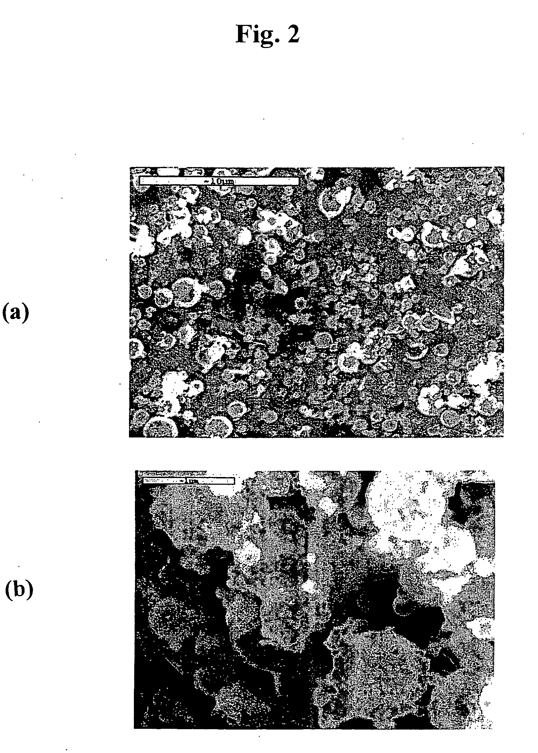

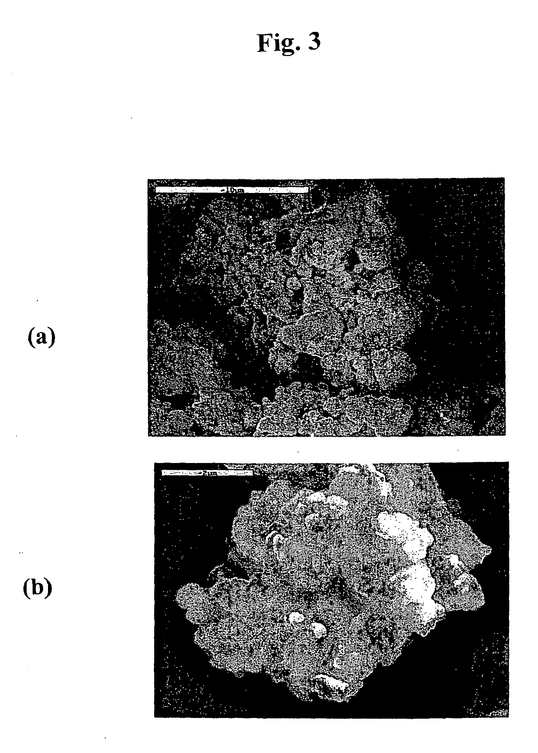

The size of the catalyst nanoparticles deposited is in the range of 50 to 500 nm depending on the kind of catalyst used. A range of 200 to 400 nm is preferred. Fig. 2 shows a SEM photograph of catalyst particles on a filter support deposited according to the process of the invention. The catalyst deposited forms a homogenous coating of finally divided catalyst nanoparticles covering the filter support including the pores. In contrast thereto, a catalyst deposited according to conventional slurry impregnation is present in clusters providing an inhomogenous distribution of catalyst particles on the filter support as shown in Fig. 3. Cluster formation inevitably results in plugging the support pores which affects filter efficiency.

The porous filter support can be of any material and is preferably made of any high temperature ceramic such as but not limited to cordierite, silicon carbide, silicon nitride, SiAlON, mullite, aluminium titanate and so on, or any high temperature metal or metal alloy such as but not limited to Nickel, Nichrome, Fecralloy®, Inconel®, Hastalloy® and so on or any high temperature fibrous material such as Nextel®, aluminosilicate, alumina, titania, and so on. Combinations or mixtures of the above materials to make porous filter supports are also covered within the scope of the present invention.

The present invention provides a catalytic filter comprising a porous filter support and a catalytic coating provided thereon. The catalyst coating comprises catalyst particles having a particle size of 50 to 500 nm, preferably 200 to 400 nm. The mass loading of the catalyst particles on the catalyst filter surface(s) is in the range of 0.5 to 60.1 g/m², preferably 5.00 to 35 g/m², particularly preferred 12.00 to 30.00 g/m². The catalyst material can be any material suitable for catalyst filter surface(s). For example, the catalyst materials mentioned above, can be used.

In a preferred embodiment of the catalyst filter according to the invention, the porous filter support is a honeycomb structural body which can be efficiently used to remove particular matter emitted from internal combustion engines. The particular matter is soot, e.g., which is emitted from a diesel internal combustionengine.

In a preferred embodiment of the invention the porous filter support is a honeycomb structural body having a multichannel structure with alternatively plugged channels where particle laden exhaust flow is filtered through porous walls and a soot deposit grows in the inlet channel.

A catalyst filter of the present invention and a catalyst filter comprising a porous filter support and a catalytic coating produced according to the invention show an excellent performance in particular when used as a diesel particulate filter (DPF). Particulate matter such as soot particles emitted from a diesel internal combustion engine is sufficiently removed. The particulate fine carbon particles are completely oxidized. Material tests with a porous filter support material of 11/42 (*µ*m pore size/porosity) have shown that even though the catalyst coating is deposited as a cake layer, it still shows a high surface area due to the finely distributed, homogenous catalyst particles. Moreover, the coating stays on the filter support and cannot be removed therefrom e.g. by shaking.

Material tests with filter supports of a material of 20/60 (*µ*m pore size/porosity) confirm that the distribution of the catalyst nanopowder is absolutely homogenous with a catalyst deposition also inside the pores, in addition to the a fine layer on the filter's surface. This has been also confirmed by backscatter image experiments.

When using a multichannel honeycomb filter is desired for providing same with a catalytic coating according to the present invention, a so-called spatial modulated coating may be applied, i.e., different catalysts in and along the inlet and outlet channels may be deposited using the present aerosol spray pyrolysis process.

It has been shown in soot loading experiments carried out with catalysts according to the present invention that the back pressure is significantly reduced when a soot layer is present, i.e. when the catalyst filter is loaded with carbon-based particles.

In addition, soot loaded catalyzed filter regeneration experiments have revealed that the catalyzed filters according to the present invention show an increased reactivity and a decreased soot oxidation/reaction temperature. In addition, the CO content is significantly selectively reduced.

Finally, the full potential of the coating technology of the present invention can be seen by means of the oxidation activity. It has been shown with filters having a catalyst load of 14 g/m² that the oxidation reaction of the carbon particles occurs at lower temperature and is much quicker than it is the case with conventionally slurry impregnated coated catalysts of the same composition.

The process of the present invention as well as the catalyst filters according to the present invention have excellent performance when used to remove particulate matter emitted from internal combustion engines. It has been shown that the reaction rate is at least 40% higher than it is the case with conventionally slurry coated catalyst filters with the same composition. The regeneration temperature is always lower while the CO selectivity is at least 20% better and the back pressure is lower and more linear.

## Claims

1. A process of producing a catalytic coating on a porous filter support comprising formation of catalyst nanoparticles and deposition of said catalyst nanoparticles on the porous filter support.

2. The process according to claim 1 wherein the catalyst nanoparticles are formed by generating an aerosol comprising droplets containing catalyst precursor salts, thermal treatment of the aerosol droplets and catalyst powder production.

3. The process according to claim 1 or 2 wherein the catalyst nanoparticles are highly dispersed deposited on the surface of the porous filter support.

4. The process according to at least any one of claims 1 to 3 wherein the catalyst nanoparticle formation and the catalyst nanoparticle deposition is carried out in an aerosol reactor.

5. The process according to at least any one of claims 1 to 4 wherein the catalyst deposited is a noble metal and/or an oxide selected from the group consisting of transition metals, lanthanides, actinides, misch metals thereof and mixtures thereof.

6. The process according to any one of claims 1 to 5 comprising the steps:
- preparation of a solution containing at least one catalyst precursor salt;
- atomization of the catalyst precursor salt solution into aerosol droplets;
- heat treatment of the aerosol droplets in a first heating zone to decompose the catalyst precursor salts and
- deposition of catalyst nanoparticles on a porous filter support in a second heating zone.

7. The process according to claim 6 wherein the catalyst precursor solution is prepared by mixing organic and/or inorganic salts of metals belonging to the transition elements, lanthanides and actinides, organic additives and promoters in an aqueous medium.

8. The process according to claim 7 wherein the anions of the organic and inorganic metal salts are selected from the group consisting of nitrates, chlorides, acetates and oxalates.

9. The process according to at least any one of claims 1 to 8 wherein the catalyst precursor solution is formed into droplets by an ultrasonic atomizer.

10. The process according to at least any one of claims 1 to 9 wherein the solution droplets are transported into the first reaction zone by a carrier gas.

11. The process according to at least any one of claims 1 to 10 wherein the temperature in the first heating zone is kept at 100 to 500°C.

12. The process according to at least any one of claims 1 to 11 wherein the temperature in the second heating zone is kept at 400 to 1500°C.

13. The process according to at least any one of claims 1 to 12 wherein the catalyst nanoparticles are deposited on the surface of the porous filter support in a range of 0.5 to 60.00 g/m².

14. The process according to claim 13 wherein the range is 5.00 to 35.00 g/m².

15. The process according to claim 14 wherein the range is 12.00 to 30.00 g/m².

16. The process according to at least any one of claims 1 to 17 wherein the size of the catalyst nanoparticles deposited is in the range of 50 to 500 nm.

17. The process according to at least any one of claims 1 to 16 wherein the porous filter support is made of cordierite, silicon carbide, silicon nitride, SiAlON, mullite, aluminium titanate, Fecralloy® or other high temperature metal or metal alloy.

18. The process according to claim 17 wherein the porous filter support is a honeycomb structural body.

19. A catalyst filter comprising
- a porous filter support and
- a catalytic coating provided thereon
wherein the catalytic coating comprises catalyst particles having a size of 50 to 500 nm which are homogeneously distributed on the filter support and the mass loading of the catalyst particles is in the range of 0.5 to 60.00 g/m².

20. The catalyst filter according to claim 19 wherein the porous filter support is a honeycomb structural body.

21. A catalyst filter comprising a porous filter support and a catalytic coating produced according to any one of claims 1 to 20.

22. The catalyst, filter according to claim 21 wherein the porous filter support is a honeycomb filter.

23. Use of a catalyst filter according to at least anyone of claims 19 to 22 for removing particulate matter emitted from internal combustion engines.

24. The use of claim 23 wherein the particulate matter is soot emitted from a diesel internal combustion engine.
